(19)

Europäisches
Patentamt
European
Patent Office
Office européen
des brevets

(11) **EP 1 912 041 B1**

(12) **EUROPEAN PATENT SPECIFICATION**

(45) Date of publication and mention
of the grant of the patent:
**28.10.2009 Bulletin 2009/44**

(51) Int Cl.:
***G01C 5/00*** *(2006.01)*

(21) Application number: **06021161.2**

(22) Date of filing: **09.10.2006**

(54) **Apparatus and method for determining an elevation of working tools**

Vorrichtung und Verfahren zur Höhenbestimmung von Arbeitswerkzeugen

Appareil et procédé de détermination d'une élévation d'outils de travail

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**16.04.2008 Bulletin 2008/16**

(73) Proprietor: **MOBA - Mobile Automation AG
65604 Elz (DE)**

(72) Inventor: **SEHR, Willibald
65589 Hadamar-Steinbach (DE)**

(74) Representative: **Zimmermann, Tankred Klaus et al
Schoppe, Zimmermann, Stöckeler & Zinkler
Patentanwälte
Postfach 246
82043 Pullach bei München (DE)**

(56) References cited:
**EP-A- 1 524 498     WO-A-92/03701
GB-A- 2 173 369     GB-A- 2 341 026
US-A- 4 820 041**

**Description**

The present invention relates to an apparatus and a method for determining an elevation of a working tool with respect to a reference plane and especially to a radio based laser-positioning system.

In order to direct a construction machine or more generally a working tool on a construction site, there is a need for determining not only a position of the construction machine along horizontal directions, but also to obtain and control a vertical elevation. There are different methods available for surveying a ground profile and to direct working tools or construction machines accordingly. For example, a system to measure the absolute position can be set up on the basis of GPS (GPS = Global Positioning System). A different system measures local or relative positions with respect to a reference point and uses for example so-called total stations or laser transmitters. Also combinations of both systems are known.

Moreover, simple measuring tools are available that use an existing ground profile as a basis on which a new ground profile is developed.

GPS-based positioning systems, e.g. hand-held or mounted systems, are generally known. To achieve an increased position accuracy different approaches are possible. For example, a reference station or RTK evaluation (RTK = Real Time Kinematics) can be used, and depending on effort and resources position accuracy in a centimeter region is possible.

In systems using the total station, a robot guided measuring station follows a prism mounted on a movable part and transmits the evaluated coordinates to a recipient, that evaluates on the basis of this data a local position of the prism within the construction site. The effort is significant and in systems using the total station only one prism can be followed at a given time, which is disadvantageous although the position accuracy reaches already a sub-centimeter range.

Laser-based systems are used in cases where the knowledge about the elevation above a horizontal or reference plane is more important than the exact position within the horizontal plane. This is, for example, the case for construction at a known position or for underground construction of buildings or drainage.

Conventional laser transmitters operate preferably such that a rotating mirror reflects by 90° a point-like vertical aligned laser beam. As a consequence, a fan-shaped horizontal light plane is generated, which exhibits a small convergence and reaches a radius of approximately 300 meters. Since the whole unit is on an internal self-leveling platform, a stable optical reference is obtained, which can be detected by a vertical array of photo diodes.

Also combined GPS- and laser-based systems are known. The GPS signal is used as a coarse elevation information. The laser system transmits fan-shaped laser beams (as a Z-shaped laser beam, for example) and is used to improve significantly the vertical accuracy or resolution, i.e. the information about the elevation along the z-axis. This method is known as millimeter-GPS and combines the advantage of high precision measurement with the possibility of using the system simultaneously by various participants. It is, however, technically very costly.

Such systems are, for example, described in US 6,947,820. Another laser system having two or more transmitters at known positions is described in US 6,630,993. Here, each laser system continuously sweeps the working place and from the relative angles between the working tool and the transmitter positions, the position of the working tool can be calculated. Yet another rotating laser system is described in US 6,535,282 and uses a strobe pulse and time delay measurements to determine the relative angles and the position of the working tool. Another laser system using radio strobe signals is described in WO 92/03701, wherein a radio signal is transmitted whenever the rotary laser system passes a specific point and a time delay measurement is used to determine the relative angle. In order to determine the three coordinates of the position three rotary laser systems are needed.

It is the object of the present invention to provide an apparatus and a method for determining an elevation of a working tool relative to a reference plane to a high precision while still providing a low cost and easy to handle system to be used by various participants at a same time.

This object is achieved by an apparatus according to claim 1, and by a method according to claim 10.

In accordance with embodiments of the present invention an apparatus for determining an elevation of a working tool relative to a reference plane comprises a rotary laser system emitting at least two non-parallel fan-shaped laser beams diverging in a plane inclined relative to the reference plane, a radio unit configured to measure a distance between the working tool and the rotary laser system based on an elopsed time between a transmitted and a returned radio-signal and a detector mounted on the working tool for detecting each of the laser beams. The elevation of the working tool is determined on a basis of a time delay between the receipt of the fan-shaped laser beams at the detector and the distance between the working tool and the rotary laser system.

In accordance with embodiments of the present invention a method for determining an elevation of a working tool relative to a reference plane comprises emitting two non-parallel fan-shaped laser beams from a rotary laser system diverging in a plane inclined relative to the reference plane, detecting a time delay between a receipt of the fan-shaped laser beams at the working tool and measuring a distance between the rotary system and the detector (130) on the working tool. The elevation of the working tool is evaluated on the basis of the detected time delay and the measured distance.

In accordance to the present invention, embodiments combine two technologies, namely a rotary laser system and a radio based distance measurement module.

The laser system according to the present invention extends the before mentioned conventional laser system in a way that not a point-like, but a fan-shaped laser beam is generated. In a preferred embodiment the fan-shaped laser beam comprise a V-shaped laser beam. The V-shaped laser beam can be achieved, for example, by a special optic. In addition, the laser beam is transformed in the preferred embodiment into a rotating "standing V signal" by a specific apparatus, which rotates e.g. the optic around a vertical axis with a specific angular velocity. If the rotational velocity were slowed down, after a projection of the "standing V signal" onto a wall a "V" would emerge that moves in a horizontal direction. A height of the "V" depends on one hand on the chosen optic (and hence is also limited) and on the other hand the height of the "V" is dependent on a distance of the transmitter to a receiver, i.e. to the wall for the case at hand.

Codable distance measurement modules rely for example on radio signals (e.g. using 5.8 GHz) and are known as LPR-B (LPR = Local Positioning Radar). A black box transmits a radio signal and another apparatus, located at a specific distance (with an approximate maximum of 500 meters) receives the signal and returns a coded signal. The original transmitter receives the returned information and evaluates from a time delay between transmitting the signal and receiving the return signal the distance to the apparatus. A conceivable accuracy is within or even below the centimeter range. With this method it is possible to measure by simple means distances between a rotary laser system and a detector, which can be mobile or stationary.

The present invention combines the laser system and the radio-based distance measurement module and the operating principle can be summarized as follows.

The rotary laser system is set-up at a boundary of the construction site and generates the fan-shaped or more specific the V-shaped rotating laser beam with a lower tip of the "V" adjusted to a reference plane, or to a horizon. The height of the "V" is not constant along the propagation of the laser beam and the vertical resolution of the "V" is, for example, 3.5%. Therefore at a distance of 100 meter, the V-shaped laser beam is 3.5 meters tall and this corresponds to an opening angle of the V-shaped laser beam of approximately two degrees. Hence, the rotating V-shaped laser beam defines a sensor region in which laser pulses are detectable, i.e. it has a lower limit given by the reference plane and an upper limit given by the height of the "V" above the reference plane. In practice, one has to compromise between a large working area with a disadvantage of a smaller vertical resolution or a small working area and a better vertical resolution.

The laser beam rotates and hits a detector, which can be mobile or is mounted on a working tool and comprise an optional lens to focus the optical signal generated by the laser beam. Since the laser beam is fan-shaped, the radiation intensity per square centimeter is much lower, when compared to a conventional laser beam, and hence, special photo diodes or even avalanche diodes should preferably be used for the detection of pulses from the laser beam. The rotational velocity is kept regular and constant by electronics and in a typical example the laser rotates ten times per second.

If the laser beam hits the detector with the lower tip of the "V" a single pulse will be generated, which signals that the detector is at the same height as the laser system or the detector is in the reference plane. If the detector detects two pulses, the detector is above the reference plane and the more time elapses between both pulses the more the detector is above the reference plane. Hence, a time delay between both pulses determines the elevation angle of the detector with respect to the laser transmitter (more details are explained below). If there are no pulses detected, the detector is out of the sensor range, i.e. the detector is either below or more than the height of the "V" above the reference plane.

The laser transmitter as well as the detector comprises additional radio units or modules for a distance measurement. In the case the detector detects a laser pulse from the laser transmitter, a distance measurement is initiated by using the radio modules. The distance measurement uses an elapsed time between a transmitted and returned radio signal so that after the elapsed time the result of the distance measurement is available. Together with the evaluated elevation angle, the elevation can be evaluated and displayed.

The present invention is advantageous in that an improved reliability is provided, because neither is a GPS signal necessary nor a strobe pulse for synchronization. The technology is simple, reliable and available at low cost. Especially radio transponders are very fast and accurate. In addition, only one laser transmitter is needed and an optional hand-held detector can be used to survey the working area and/or to define together with the laser transmitter a reference line. It is furthermore beneficial that the present invention allows combining the elevation control with a local (relative) position control in the reference plane.

Features of the invention will be more readily appreciated and better understood by reference to the following detailed description, which should be considered with reference to the accompanying drawings, in which:

Fig. 1          shows a rotary laser system and a stationary detector with radio units;

Fig. 2          shows the rotary laser system emitting a V-shaped laser beam;

Fig. 3          shows the rotary laser system mounted on a level platform;

Fig. 4          shows the stationary detector;

Fig. 5a and 5b    are schematic views on a laser generating the V-shaped laser beam;

Fig. 6          shows pulse signals detected dependent on an elevation of the stationary detector at a fixed distance;

Fig. 7          shows the V-shaped laser beam;

Fig. 8          shows a further detector;

Fig. 9          shows a top view on a working area with the rotary laser system and the further detector at two corners; and

Fig. 10         is a schematic view about the geometrical quantities for the embodiment of Fig. 9.

In the subsequent description of the embodiments of the present invention same or equivalent elements or elements having the same effect or function are provided with the same reference numerals.

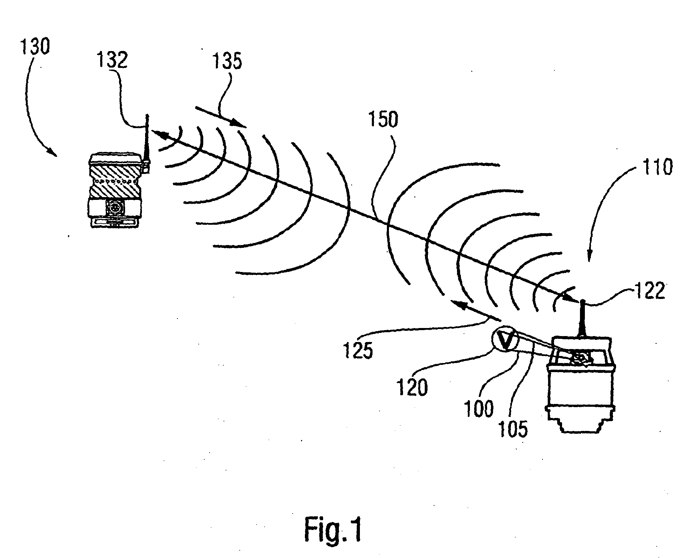

Fig 1 shows an embodiment of the present invention having a rotary laser system 110 transmitting a V-shaped laser beam 120, a stationary detector 130 arranged at a distance 150 away from the rotary laser system 110. Upon rotation the V-shaped laser beam 120 spans a reference plane 100 given by a lower tip of the V-shaped laser beam 120 and an upper plane 105 defined by a height of the V-shaped laser beam 120 above the reference plane 100. The rotary laser system 110 comprises a radio unit (not shown in the figure) connected to a radio antenna 122 and the stationary detector 130 comprises another radio unit (not shown in the figure) connected to a radio antenna 132.

The stationary detector 130 will detect two pulses if it is located between the reference plane 100 und the upper plane 105 when the first pulse is detected a distance measurement is initiated in way that the stationary detector 130 transmits a radio signal 135 and the rotary laser system 110 responds after receiving the radio signal 135 with a radio signal 125. The stationary detector 130 measures an elapsed time between transmission of the signal 135 and the reception of the return radio signal 125 and determines the distance 150 on the basis of the elapsed time. The return radio signal 125 can be different from the transmitted signal 135 and can comprise a code that identifies the rotary laser system 110. This is advantageous in that misinterpretations are avoided in cases in which plural radio units operate on the working area. The rotary laser system 110 comprises a so-called radio-transponder.

In a different embodiment the time at which the distance measurement is initiated can vary. For example, the distance measurement can be initiated by the second pulse or at another time in-between of both pulses. To use the second pulse to initiate the distance measurement is advantageous in that the first pulse can be used as an alert signal, so that the system initiate a distance measurement only if two pulses are detected within a very short time period. With this approach it is possible to eliminate light signals from different sources and the stationary detector 130 can be triggered exactly upon receipt of light beams of the used rotary laser system 110. Even if more laser systems are used on the working area, by different angular velocities it is possible to trigger each detector on its own laser system, i.e. at a given elevation both laser pulses follow with a delay given by the used angular velocity and hence a distance measurement can be initiated only if the time delay is within an expected time range.

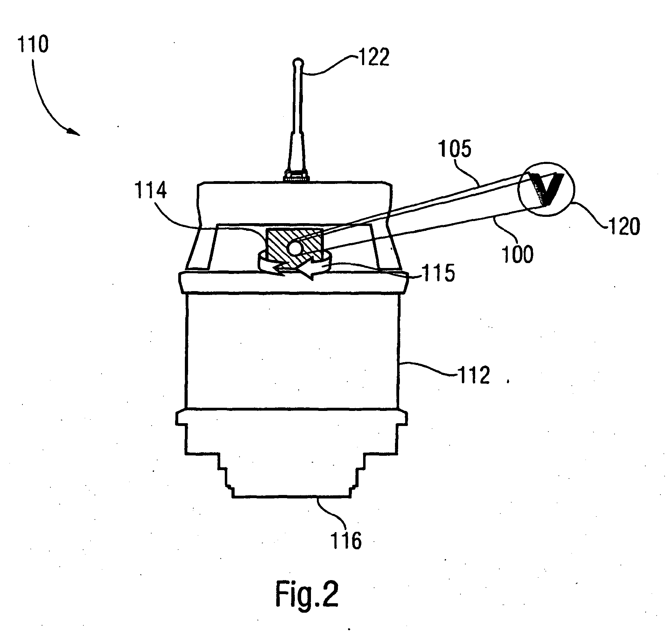

Fig. 2 shows the rotary laser system 110 having an enclosure 112, a rotating optical output 114 for the V-shaped laser beam 120 and the radio antenna 122 connected to the radio unit (not shown in the figure). The optical output 114 for the laser beam 120 rotates in a preferred embodiment with a constant angular velocity as indicated by the arrow 115. Upon rotation the V-shaped laser beam 120 defines the reference plane 100 (by the lower tip of the "V") and the upper plane 105 (by upper ends of the "V"). The rotary laser system 110 comprises moreover a holder 116 used for mounting the rotary laser system 110 on a platform at a fixed position.

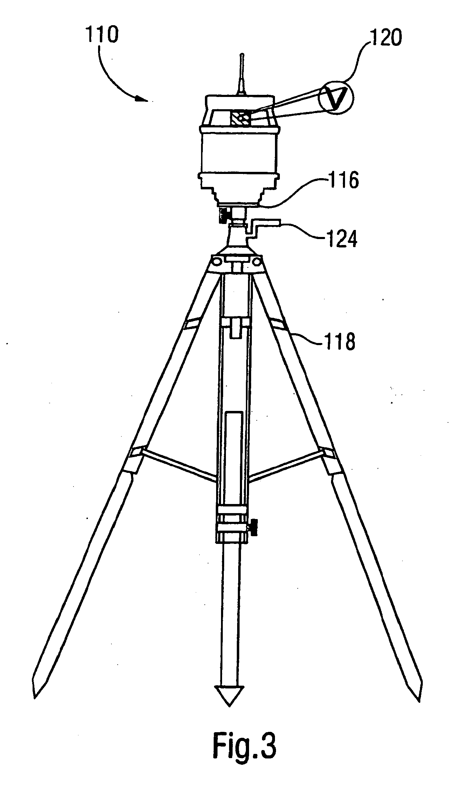

Fig. 3 shows the rotary laser system 110 mounted on a holder 116 on a tripod 118. The tripod 118 is used to level the rotary laser system 110 and comprises a height adjustment 124 used for fine adjustment of the elevation of the rotary laser system 110.

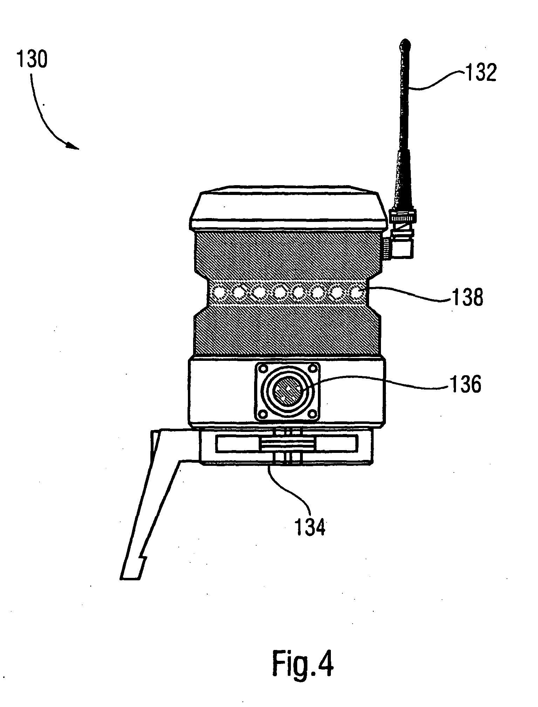

Fig. 4 shows the stationary detector 130 with the radio antenna 132 connected to a radio unit (not shown in the figure), a mounting table 134, a CAN-connection 136 (CAN = Controller Area Network) and an array of photocells 138. The mounting table 134 is used to mount the stationary detector 130 at the working tool at a defined position. In the example the working tool is a construction machine used to level a ground profile of the construction site, this defined position should have a defined height over the ground in order to translate the elevation of the stationary detector 130 over the reference plane 100 into an elevation of the ground with respect to the reference plane 100. The CAN-connection 136 is used to connect the stationary detector 130 to a processing unit, which performs the evaluations from the data, or to a display if the stationary detector 130 performs the evaluation of the elevation.

In a preferred embodiment the array of photocells 138 is all around the stationary detector 130 in order to be able to detect the V-shaped laser beam 120 from any horizontal direction. This has the advantage that the working tool can freely move in the working area while detecting the V-shaped laser beam 120 from the rotary laser system 110.

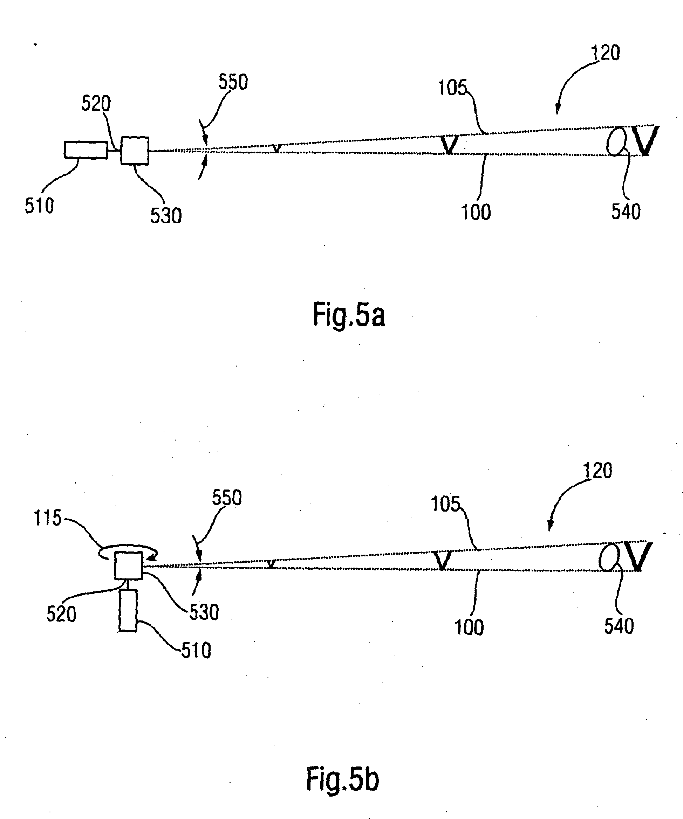

Fig. 5a shows a laser source 510 generating a point-like laser beam 520 and a following optic 530 that generates from the point-like laser beam 520 the V-shaped laser beam 120. The V-shaped laser beam 120 diverges in a plane inclined relative to the reference plane 100 by an angle 550. An exemplary value for the angle 550 is two degrees. Upon rotation the V-shaped laser beam 120 spans the reference plane 100, given by the lower tip of the "V", and an upper plane 105, given by the upper ends of the "V". A region between both the reference plane 100 and the upper plane 105 is a sensor region 540, where the laser signal can be detected. The height of the "V" and hence the height of the sensor region 540 is a linear growing function with a distance from the optic 530.

In order to generate a rotating laser beam either the laser source 510 together with the optic 530 are configured to rotate, or in another embodiment an additional rotational device is added, which rotates the V-shaped laser beam 120 from the output of the optic 530.

Fig. 5b shows an embodiment, where the laser beam 520 enters the optic 530 not in a horizontal direction (as shown in Fig. 5a), but in a vertical direction from below. In this case, the optic 530 is combined with a mirror so that the vertical laser beam 520 becomes the horizontal V-shaped laser beam 120. In addition, in this embodiment the optic 530 is configured to generate the rotation with a preferably constant angular velocity and the arrow 115 shows an exemplary rotational sense. In different embodiment the rotational sense is opposite or it may vary.

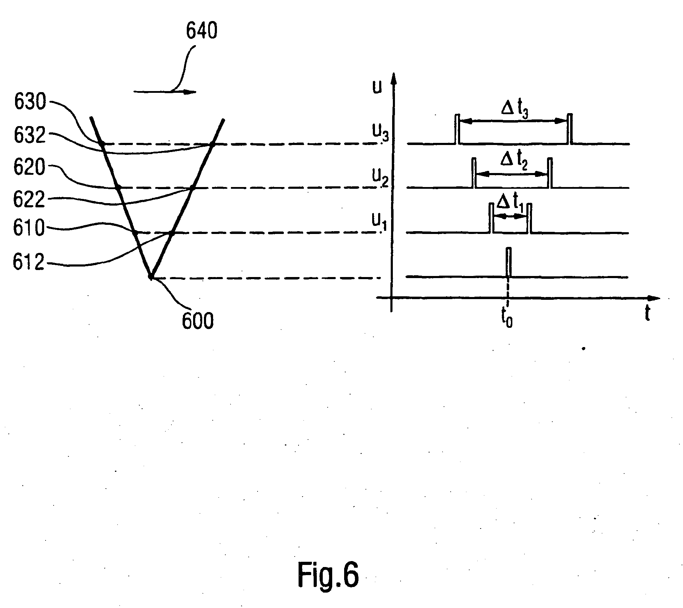

Fig. 6 shows a cross section of the V-shaped laser beam 120 in a plane perpendicular to a propagation direction of the V-shaped laser beam 120. The V-shaped laser beam 120 generates pulses at the stationary detector 130 and depending on an elevation U of the stationary detector 130 there will be no pulse, one pulse or two pulses. There is one pulse if the stationary detector 130 is on the reference plane 100 as given by the lower tip of the V-shaped laser beam 120. There are two pulses if the elevation U of the stationary detector 130 is within the sensor region 540. If the elevation of the stationary detector 130 is outside the sensor region 540, no pulses are detected. This will happen if the stationary is detector 130 is either below the reference plane 100 or above the upper plane 105.

If the elevation of the stationary detector 130 is on the reference plane 100 a pulse 600 will be detected at a time to. If the stationary detector 130 is within the sensor region 540 a time delay between the two pulses will depend on the elevation U. For example, at a first elevation $U_1$ the stationary detector 130 detects two pulses 610 and 612 with a time delay $\Delta t_1$; at a second elevation $U_2$ two pulses 620 and 622 are detected with a time delay $\Delta t_2$ and finally a third elevation $U_3$ is related to two pulses 630 and 632 with a time delay by $\Delta t_3$.

In this embodiment the moving direction of the rotating laser beam 120 is indicated by the arrow 640 so that, depending on the elevation U, the first detected pulses are 632 or 622 or 612, which are followed by the pulses 630 or 620 or 610. In order to evaluate the elevation U, the distance 150 of the stationary detector 130 to the rotary laser system 110 is measured by the radio module as explained before.

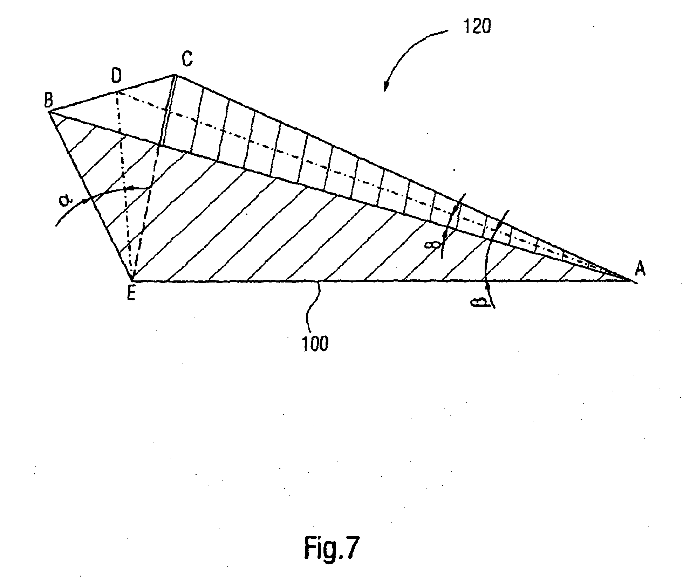

Fig. 7 explains elevation U of the stationary detector 130 above the reference plane 100. In this embodiment the rotary laser system 110 is at a position A and the stationary detector 130 is at a position D, which is above the reference plane 100 by the length of the line DE. The V-shaped laser beam 120 comprises two fans, one is given the triangle ABE and the other is given by the triangle ACE. The opening angle of the "V" is given by the angle BEC and half of this angle is denoted by $\alpha$, i.e. the point D is in the middle between the points C and B, which are the two pulses detected by the stationary detector 130. An elevation angle is denoted by $\beta$ and an angle $\gamma$ is half of an opening angle of the "V".

From the time delay $\Delta t$ between the time when the pulse C and the time when the pulse B is detected, the angle $\gamma$ (i.e. the angle BAD) can be calculated and if the constant angular velocity is denoted by $\omega$, the angle $\gamma$ will become:

$$\gamma = \frac{\omega \, \Delta t}{2} \; .$$

Since the angle $\alpha$ is also known, the angle $\beta$ (angle EAD) can be calculated by:

$$\sin \beta = \frac{\tan \gamma}{\tan \alpha} \; .$$

The elevation U from Fig. 6 is in Fig. 7 given by the length of the line ED, and if the distance between the rotary laser system 110 and the stationary detector 120, i.e. the length of the line AD is denoted by r, the elevation U will become:

$$U = r \sin \beta = r \frac{\tan \gamma}{\tan \alpha} \, .$$

The length r is obtained from the radio-based distance measurement as described at Fig. 1 for the case that the distance measurement to the rotary laser system 110 at the position A is performed in the middle of both pulses. If the distance measurement is initiated at the first or second pulse, i.e. at the point C or at the point D, the elevation U can be obtained from

$$U = r_0 \frac{\sin \gamma}{\tan \alpha} \, ,$$

where $r_0$ denotes the length of the line AB, which is the same as the length of the line AC. As mentioned above, using the second pulse may be beneficial in order to trigger the stationary detector 120 on the rotary laser system 110.

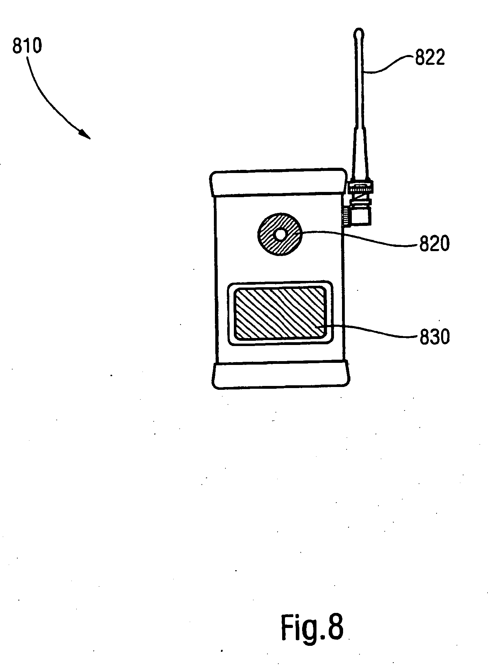

Fig. 8 shows a further detector 810 with a photocell 820, which can comprise, for example, a photo diode and an optional optic to focus the pulses from the V-shaped laser beam on the photocell. The further detector 810 includes furthermore the radio antenna 822 connected to a radio unit (not shown in the figure) and a display 830. In a preferred embodiment this further detector 810 is not stationary, but is instead mobile or a hand-held device and is used to survey the working area or define in addition to the rotary laser system 110 another reference point and use it for an additional position evaluation. This will be explained in more detail in the following.

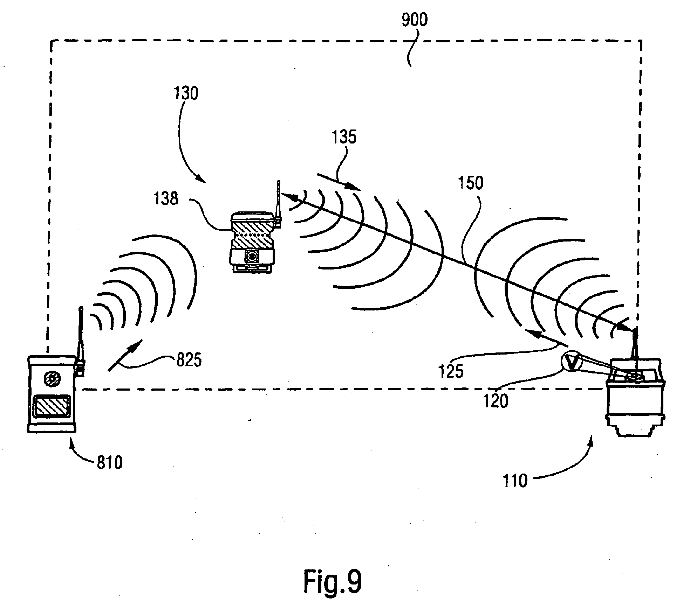

Fig. 9 shows an exemplary use of the further detector 810. The rotary laser system 110 and the further detector 810 are positioned at two corners of an area 900, within which the stationary detector 130 is located. In this embodiment the further detector 810 transmits a radio signal 825 when the V-shaped laser beam 120 is detected by the further detector 810. Again, the radio signal 825 can be transmitted in the moment the first or second pulse of V-shaped laser beam 120 is detected (another time to transmit the radio signal 825 can be used as well) and when the radio signal 825 is received by the stationary detector 130, the stationary detector 130 initiates a measurement of the distance 150 to the rotary laser system 110 by transmitting the radio signal 135 and measuring the elapsed time until the return radio signal 125 is received. This distance measurement is the same as the one discussed in the context of Fig. 1. As only difference here, it is initiated by the radio signal 825 and not by the laser pulses as in the embodiment discussed in the context of Fig. 1.

In addition to the measurement the distance 150, the stationary detector 130 measures a time duration T between the receipt of the radio signal 825 and the moment the V-shaped laser beam 120 is detected by the array of photocells 138. Again, since the angular velocity $\omega$ of the V-shaped laser beam 120 is constant and known, an angle $\psi$ between the two lines connecting the rotary laser system 110 with the further detector 810 and the line of the rotary laser system 110 to the stationary detector 130 can be evaluated (see next formula). The transmission of the radio signal 825 can be initiated immediately after the first laser pulse is detected, but in further embodiments it may be again of advantage to initiate the transmission of the radio signal 825 by the second laser pulse in order to trigger the further detector 810 on the used rotary laser system.

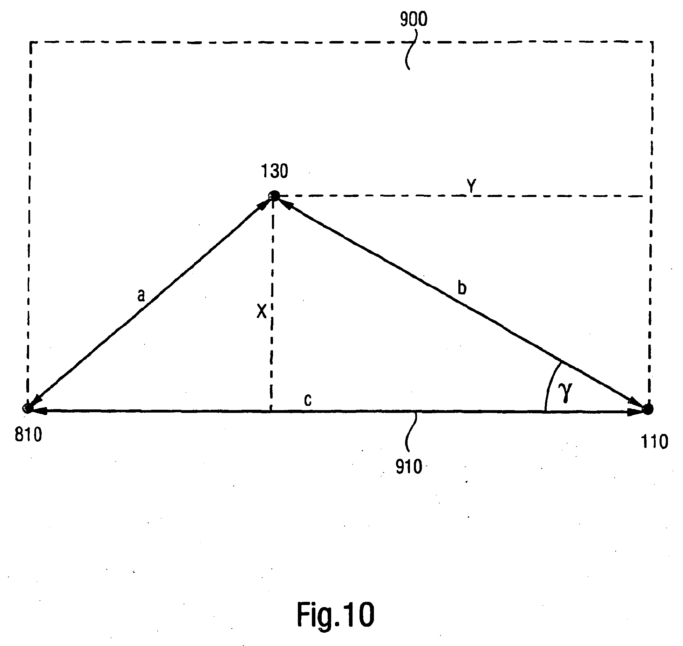

Fig. 10 shows geometric quantities, which are used for an evaluation of a position of the stationary detector 130 within the area 900. As in the embodiment of Fig. 9, the rotary laser system 110 and the further detector 810 are at two corners of the area 900 and the stationary detector 130 is within the area 900. By using the time duration T and the angular velocity $\omega$, the angle $\psi$ is given by:

$$\psi = \omega T \, .$$

The distance 150 is denoted in Fig. 10 by b and hence the relative coordinates X and Y can be obtained from b and the angle $\Psi$ by

$$X = b \sin \psi \quad , \quad Y = b \cos \psi \, .$$

In a different embodiment, the measurement of the distance 150 is initiated by the rotary laser system 110, namely by sending the radio signal 125 when the V-shaped laser beam passes a zero reference mark 910. At the time the stationary detector 130 receives the radio signal 125, it transmits the radio signal 135 and the rotary laser system 110 evaluates from the elapsed time between transmitting the radio signal 125 and receiving the radio signal 135 the distance 150, which is again denoted by b in Fig. 10. At the same time, the stationary detector 130 measures the time duration T between receiving the radio signal 125 and detecting the V-shaped laser beam 120 and evaluates again the angel $\psi$ and therewith the relative coordinates X and Y in terms of the formulae given before. In this embodiment no further detector 810 is needed, but instead a known zero reference mark 910 is used. The zero reference mark 910 can agree with line from the rotary laser system 110 and the further detector 810, but it may also be another line.

In a further embodiment, the coordinates X and Y are evaluated not by measuring the angle $\Psi$, but instead by determining side lengths of a triangle spanned by the rotary laser system 110, the further detector 810 and the stationary detector 130. As discussed at Fig. 9, at the time the V-shaped laser beam 120 is detected by the further detector 810, the further detector 810 transmits the radio signal 825, which in turn initiate the measurement of the distance 150, which is denoted by b in Fig. 10, between the stationary detector 130 and the rotary laser system 110. This is done here in the same way as discussed in the Fig. 9. In addition, the further detector 810 measures elapsed time periods between transmitting the radio signal 825 and receiving the radio signal 135 and the radio signal 125. Since the radio signals 825, 135 and 125 are transmitted in all directions, the further detector 810 is able to receive the radio signals 135 and 125 as well. From the elapsed time periods the further detector 810 evaluates the distances between the further detector 810 and the stationary detector 130, which denoted by a in Fig. 10, and to the rotary laser system 110, which is denoted by c in Fig. 10. Having the values for a, b, c the relative coordinates X and Y are obtained from:

$$X = \sqrt{b^2 - Y^2} \quad , \quad Y = \frac{b^2 + c^2 - a^2}{2c} \quad .$$

If moreover a global position of the rotary laser system 110 or the further detector 810 is known, with the relative coordinates X and Y, the global position of the stationary detector can be evaluated too.

In further embodiments, addition stationary detector and/or additional further detectors are used to determine an elevation of other working tools and/or to determine relative coordinates to other reference points at the same time. In the preferred embodiment each component (e.g. the rotary laser system 110, the stationary detector 130 and the further detector 810) use cadable radio modules so that each component is clearly identified by its transmitted coded radio signal.

Although in the embodiments the V-shaped laser beam 120 was discussed, according to the present invention a more general fan-shaped laser beam can also being used. Examples comprise N-shaped, X-shaped or Y-shaped laser beams. For the N-shaped case, the reference plane 100 can be given by the case where three laser pulses are detected in same time intervals. If a first time interval is shorter (longer) than the second time interval, the stationary detector 130 is above (below) the reference plane 100. For the X-shaped case, the reference plane 100 is again adjusted to the case where only one laser pulse is detected. Otherwise the stationary detector 130 is above or below the reference plane 100. Similarly, for the Y-shaped laser beam, the reference plane 100 can be identified with the elevation at which a single laser pulse splits into two laser pulses. For the N-shaped and for the X-shaped laser beam it is possible to evaluate also the distance to the reference plane 100 when the stationary detector 130 is below the reference plane 100. The Y-shaped laser beam on the other hand signals the case, where the stationary detector 130 is below the reference plane 100, with a single pulse signal.

Advantages of embodiments of the present invention comprise the improved reliability, because it neither uses the GPS signal nor a strobe pulse for synchronization. The employed technology is simple, reliable and available at low costs. Especially radio transponders are very fast and accurate. In addition, only one transmitter is needed and an optional hand-held detector can be used to survey the working area and to define together with the laser transmitter a reference line. It is furthermore beneficial that the present invention allows combining the elevation control with a local (relative) position control in the reference plane. A further advantage of embodiments of the present invention is that the rotary laser system 110 can be used by more working tools at the same time. In order to identify each working tool appropriately, codable radio modules with different codes should be used.

In summary, embodiments of the present invention comprises the following components:

1) a rotary laser system 110 (Fig. 2) with

- conventional level platform,
- the V-shaped laser beam 120 rotating with a constant angular velocity ω

- the radio based distance measurement module

2) the further detector 810 comprising the laser detector 820, the radio module, calculation unit and the display 830 (Fig. 8);

3) the stationary detector 130 comprising the radio module, a evaluation unit and the CAN-bus interface 136 (Fig. 4).

The stationary detector 130 (Fig. 4) is similarly constructed as the further detector 810 comprises however the array of horizontal photocells 138 for all-round detection and a signal evaluation on the basis of the CAN-bus 136.

In different embodiments, in order to generate an arbitrary elevation profile of a given area the rotary laser system 110 was synchronized in terms of two different ways.

1. The internal synchronization.

In this case the laser system 110 is aligned, so that one edge is parallel to a corner line of a given project (for example a side line of a sport field), so that in the moment of passing of this zero reference mark 910 during each revolution a distance measurement is initiated. The corresponding pulse initiates in the stationary detector 130 a time measurement until the moment the V-shaped laser signal 120 is detected. Since the rotational velocity $\omega$ is known, the angle $\psi$ between the edge of the project and the receiver can be evaluated.

2. The external synchronization

In this case the further detector 810 is put on a corner of the area 900 after surveying the working area and hence is not needed anymore. In the moment the laser beam 120 is detected by the further detector 810, the radio signal 825 is transmitted and a distance measurement is performed. The stationary detector 130 synchronizes itself on the radio signal 825 and starts a time measurement. By using the information of the synchronization starting time, the elevation angle $\beta$ and the distance 150 the receiver (the stationary detector 130 e.g.) evaluates its local position as given by the coordinates X, Y and Z.

Another possibility to evaluate the coordinates X and Y of the stationary detector 130 is given by putting the further detector 810 at another fixed point (Fig. 10) and to use a distance measurement between the rotary laser system 110 and the stationary detector 130 (denoted by b) as well as a distance measurement between the further detector 810 and the stationary detector 130 (denoted by a) and also a distance measurement between the rotary laser system 110 to the further detector 810 (denoted by c) for the calculation of the position. The radio measured distances a, b and c be used to determine the coordinates X and Y by using the usual trigonometric equations (see equations above).

**Claims**

1. An apparatus for determining an elevation of a working tool relative to a reference plane (100), comprising:

   a rotary laser system (110) emitting at least two non-parallel fan-shaped laser beams (120) diverging in a plane inclined relative to the reference plane (100);
   a radio unit configured to measure a distance (150) between the working tool and the rotary laser system (110) based on an elapsed time between a transmitted and a returned radio signal; and
   a detector (130) mounted on the working tool for detecting each of the laser beams,

   wherein the elevation of the working tool is determined on a basis of a time delay between the receipt of the fan-shaped laser beams (120) at the detector (130) and the distance (150) between the working tool and the rotary laser system (110).

2. The apparatus according to claim 1, wherein the radio unit comprises a radio-transponder, which is mounted on the rotary laser system.

3. The apparatus according to claim 1 or claim 2, wherein a cross section of the fan-shaped laser beams (120) perpendicular to a propagation direction of the fan-shaped laser beams (120) is a V-shaped, and wherein a tip of the V-shape is in the reference plane (100).

4. The apparatus according to one of the claims 1 to 3, wherein the radio unit is configured to measure the distance (150) when the fan-shaped laser beams (120) pass a zero reference mark (910), and wherein the detector (130) is configured to measure a time period from the passing of the zero reference mark (910) to the detection of the fan-shaped laser beams (120) at the detector (130), the distance (150) and the time period being used to determine a position of the working tool.

5. The apparatus according to one of the claims 1 to 4, comprising a further detector (810) for detecting the fan-shaped laser beams (120) and for measuring a further time delay between the receipt of the fan-shaped laser beams (120), wherein the further detector (810) comprises a further radio unit configured for a further distance measurement, and wherein the further detector (810) is located at a reference point and is configured to determine an elevation of the reference point over the reference plane (100) based on the further time delay and the further distance measurement.

6. The apparatus according to claim 5, wherein the further detector (810), transmits a radio signal (825) after detecting the fan-shaped laser beams (120), and wherein the detector (130) is configured to receive the radio signal (825) and to measure a further time period between receiving the radio signal (825) and detecting the fan-shaped laser beams (120), and the further time period and the distance (150) being used to determine a position of the working tool.

7. The apparatus according to claim 5 or claim 6, wherein the radio unit and the further radio unit are configured for a simultaneous measurement of distances between the rotary laser system (110), the detector (130) on the working tool and the further detector (810) when the fan-shaped laser beams (120) pass the zero reference mark (910) and/or when the further detector (810) detects the fan-shaped laser beams (120).

8. The apparatus according to one of the claims 4 to 7, comprising a processing unit configured to determine the elevation of the working tool and/or the position of the working tool relative to the rotary laser system (110) on the basis of the time delay and the distance measurements and/or the time period and/or the further time period.

9. The apparatus according to one of the claims 1 to 8, wherein the detector (130) comprises a horizontal array of photocells (138).

10. A method for determining an elevation of a working tool relative to a reference plane (100) comprising:

emitting two non-parallel fan-shaped laser beams (120) from a rotary laser system (110) diverging in a plane inclined relative to the reference plane (100);
detecting a time delay between a receipt of the fan-shaped laser beams (120) at the working tool; and
measuring a distance (150) between the rotary system (110) and the detector (130) on the working tool based on an elapsed time between a transmitted and a returned radio signal,

wherein the elevation of the working tool is evaluated on the basis of the detected time delay and the measured distance.

11. The method according to claim 10, further comprising measuring a time period between the fan-shaped laser beams (120) passing a zero reference mark (910) and the detector (130) detecting the fan-shaped laser beams (120) to determine a position of the working tool.

12. The method according to claim 10 or claim 11, further comprising measuring a further time period between the fan-shaped laser beams (120) passing a further detector (810) and the detector (130) detecting the fan-shaped laser beams (120) in order to evaluate the position of the working tool.

13. The method according to claim 12, comprising measuring of distances between the rotary laser system (110), the detector (130) at the working tool and the further detector (810) simultaneously in order to determine the position of the working tool.

**Patentansprüche**

1. Eine Vorrichtung zum Bestimmen einer Höhe eines Arbeitswerkzeugs relativ zu einer Referenzebene (100), die folgende Merkmale aufweist:

ein Drehlasersystem (110), das zumindest zwei nicht-parallele fächerförmige Laserstrahlen (120) emittiert, die in einer Ebene divergieren, die relativ zu der Referenzebene (100) geneigt ist;

eine Funkeinheit, die konfiguriert ist, um auf der Basis einer zwischen einem gesendeten und einem rückgeführten Funksignal verstrichenen Zeit einen Abstand (150) zwischen dem Arbeitswerkzeug und dem Drehlasersystem (110) zu messen; und

einen Detektor (130), der an dem Arbeitswerkzeug befestigt ist, zum Erfassen jedes der Laserstrahlen,

wobei die Höhe des Arbeitswerkzeugs auf einer Basis einer Zeitverzögerung zwischen dem Empfang der fächerförmigen Laserstrahlen (120) an dem Detektor (130) und des Abstands (150) zwischen dem Arbeitswerkzeug und dem Drehlasersystem (110) bestimmt wird.

2. Die Vorrichtung gemäß Anspruch 1, bei der die Funkeinheit einen Funk-Transponder umfasst, der an dem Drehlasersystem befestigt ist.

3. Die Vorrichtung gemäß Anspruch 1 oder 2, bei der ein Querschnitt der fächerförmigen Laserstrahlen (120), der senkrecht zu einer Ausbreitungsrichtung der fächerförmigen Laserstrahlen (120) ist, V-förmig ist, und wobei eine Spitze der V-Form sich in der Referenzebene (100) befindet.

4. Die Vorrichtung gemäß einem der Ansprüche 1 bis 3, bei der die Funkeinheit konfiguriert ist, um den Abstand (150) zu messen, wenn die fächerförmigen Laserstrahlen (120) an einer Nullreferenzmarke (910) vorbeigehen, und wobei der Detektor (130) konfiguriert ist, um eine Zeitperiode von dem Vorbeigehen an der Nullreferenzmarke (910) bis zu der Erfassung der fächerförmigen Laserstrahlen (120) an dem Detektor (130) zu messen, wobei der Abstand (150) und die Zeitperiode verwendet werden, um eine Position des Arbeitswerkzeugs zu bestimmen.

5. Die Vorrichtung gemäß einem der Ansprüche 1 bis 4, die einen weiteren Detektor (810) zum Erfassen der fächerförmigen Laserstrahlen (120) und zum Messen einer weiteren Zeitverzögerung zwischen dem Empfang der fächerförmigen Laserstrahlen (120) aufweist, wobei der weitere Detektor (810) eine weitere Funkeinheit aufweist, die für eine weitere Abstandmessung konfiguriert ist, und wobei der weitere Detektor (810) an einem Referenzpunkt angeordnet ist und konfiguriert ist, um eine Höhe des Referenzpunktes über der Referenzebene (100) basierend auf der weiteren Zeitverzögerung und der weiteren Abstandmessung zu bestimmen.

6. Die Vorrichtung gemäß Anspruch 5, bei der der weitere Detektor (810) ein Funksignal (825) sendet, nachdem die fächerförmigen Laserstrahlen (120) erfasst worden sind, und wobei der Detektor (130) konfiguriert ist, um das Funksignal (825) zu empfangen und eine weitere Zeitperiode zwischen dem Empfangen des Funksignals (825) und dem Erfassen der fächerförmigen Laserstrahlen (120) zu messen, und wobei die weitere Zeitperiode und der Abstand (150) verwendet werden, um eine Position des Arbeitswerkzeugs zu bestimmen.

7. Die Vorrichtung gemäß Anspruch 5 oder 6, bei der die Funkeinheit und die weitere Funkeinheit konfiguriert sind für eine gleichzeitige Messung von Abständen zwischen dem Drehlasersystem (110), dem Detektor (130) an dem Arbeitswerkzeug und dem weiteren Detektor (810), wenn die fächerförmigen Laserstrahlen (120) an der Nullreferenzmarke (910) vorbeigehen und/oder wenn der weitere Detektor (810) die fächerförmigen Laserstrahlen (120) erfasst.

8. Die Vorrichtung gemäß einem der Ansprüche 4 bis 7, die eine Verarbeitungseinheit aufweist, die konfiguriert ist, um die Höhe des Arbeitswerkzeugs und/oder die Position des Arbeitswerkzeugs relativ zu dem Drehlasersystem (110) auf der Basis der Zeitverzögerung und der Abstandmessungen und/oder der Zeitperiode und/oder der weiteren Zeitperiode zu bestimmen.

9. Die Vorrichtung gemäß einem der Ansprüche 1 bis 8, bei der der Detektor (130) ein horizontales Array von Photozellen (138) aufweist.

10. Ein Verfahren zum Bestimmen einer Höhe eines Arbeitswerkzeugs relativ zu einer Referenzebene (100), das folgende Schritte aufweist:

Emittieren von zwei nicht-parallelen fächerförmigen Laserstrahlen (120) von einem Drehlasersystem (110), die in einer Ebene divergieren, die relativ zu der Referenzebene (100) geneigt ist;

Erfassen einer Zeitverzögerung zwischen einem Empfang der fächerförmigen Laserstrahlen (120) an dem Arbeitswerkzeug; und

Messen eines Abstands (150) zwischen dem Drehsystem (110) und dem Detektor (130) an dem Arbeitswerkzeug auf der Basis einer zwischen einem gesendeten und einem rückgeführten Funksignal verstrichenen Zeit,

wobei die Höhe des Arbeitswerkzeugs auf der Basis der erfassten Zeitverzögerung und des gemessenen Abstands ausgewertet wird.

**11.** Das Verfahren gemäß Anspruch 10, das ferner ein Messen einer Zeitperiode zwischen einem Vorbeigehen der fächerförmigen Laserstrahlen (120) an einer Nullreferenzmarke (910) und einem Erfassen der fächerförmigen Laserstrahlen (120) durch den Detektor (130) aufweist, um eine Position des Arbeitswerkzeugs zu bestimmen.

**12.** Das Verfahren gemäß Anspruch 10 oder 11, das ferner ein Messen einer weiteren Zeitperiode zwischen einem Vorbeigehen der fächerförmigen Laserstrahlen (120) an einem weiteren Detektor (810) und einem Erfassen der fächerförmigen Laserstrahlen (120) durch den Detektor (130) aufweist, um die Position des Arbeitswerkzeugs auszuwerten.

**13.** Das Verfahren gemäß Anspruch 12, das ein gleichzeitiges Messen von Abständen zwischen dem Drehlasersystem (110), dem Detektor (130) an dem Arbeitswerkzeug und dem weiteren Detektor (810) aufweist, um die Position des Arbeitswerkzeugs zu bestimmen.

## Revendications

**1.** Appareil pour déterminer une élévation d'un outil de travail par rapport à un plan de référence (100), comprenant:

un système laser rotatif (110) émettant au moins deux faisceaux laser en éventail non parallèles (120) divergeant dans un plan incliné par rapport au plan de référence (100);
une unité radioélectrique configurée pour mesurer une distance (150) entre l'outil de travail et le système laser rotatif (110) sur base d'un temps écoulé entre un signal radioélectrique émis et retourné; et
un détecteur (130), monté sur l'outil de travail, destiné à détecter chacun des faisceaux laser,

dans lequel l'élévation de l'outil de travail est déterminée sur base d'un retard entre la réception des faisceaux laser en éventail (120) au détecteur (130) et la distance (150) entre l'outil de travail et le système laser rotatif (110).

**2.** Appareil selon la revendication 1, dans lequel l'unité radioélectrique comprend un transpondeur radioélectrique qui est monté sur le système laser rotatif.

**3.** Appareil selon la revendication 1 ou la revendication 2, dans lequel une section des faisceaux laser en éventail (120) perpendiculaire à une direction de propagation des faisceaux laser en éventail (120) est une section en V, et dans lequel une pointe de la forme en V se situe dans le plan de référence (100).

**4.** Appareil selon l'une des revendications 1 à 3, dans lequel l'unité radioélectrique est configurée pour mesurer la distance (150) lorsque les faisceaux laser en éventail (120) passent par un repère zéro (910), et dans lequel le détecteur (130) est configuré pour mesurer un laps de temps du passage par le repère zéro (910) à la détection des faisceaux laser en éventail (120) au détecteur (130), la distance (150) et le laps de temps étant utilisés pour déterminer une position de l'outil de travail.

**5.** Appareil selon l'une des revendications 1 à 4, comprenant un autre détecteur (810) destiné à détecter les faisceaux laser en éventail (120) et à mesurer un autre retard entre la réception des faisceaux laser en éventail (120), dans lequel l'autre détecteur (810) comprend une autre unité radioélectrique configurée pour une autre mesure de distance, et dans lequel l'autre détecteur (810) est situé à un point de référence et est configuré pour déterminer une élévation du point de référence par rapport au plan de référence (100) sur base de l'autre retard et de l'autre mesure de distance.

**6.** Appareil selon la revendication 5, dans lequel l'autre détecteur (810) transmet un signal radioélectrique (825) après la détection des faisceaux laser en éventail (120), et dans lequel le détecteur (130) est configuré pour recevoir le signal radioélectrique (825) et pour mesurer un autre laps de temps entre la réception du signal radioélectrique (825) et la détection des faisceaux laser en éventail (120), et l'autre laps de temps et la distance (150) étant utilisés pour déterminer une position de l'outil de travail.

**EP 1 912 041 B1**

7. Appareil selon la revendication 5 ou la revendication 6, dans lequel l'unité radioélectrique et l'autre unité radioélectrique sont configurées pour une mesure simultanée des distances entre le système laser rotatif (110), le détecteur (130) sur l'outil de travail et l'autre détecteur (810) lorsque les faisceaux laser en éventail (120) passent par le repère zéro (910) et/ou lorsque l'autre détecteur (810) détecte les faisceaux laser en éventail (120).

8. Appareil selon l'une des revendications 4 à 7, comprenant une unité de traitement configurée pour déterminer l'élévation de l'outil de travail et/ou la position de l'outil de travail par rapport au système laser rotatif (110) sur base du retard et des mesures de distance et/ou du laps de temps et/ou de l'autre laps de temps.

9. Appareil selon l'une des revendications 1 à 8, dans lequel le détecteur (130) comprend une rangée horizontale de cellules photoélectriques (138).

10. Procédé pour déterminer une élévation d'un outil de travail par rapport à un plan de référence (100), comprenant:

émettre, à partir d'un système laser rotatif (110), deux faisceaux laser en éventail non parallèles (120) divergeant dans un plan incliné par rapport au plan de référence (100);
détecter un retard entre une réception des faisceaux laser en éventail (120) à l'outil de travail; et
mesurer une distance (150) entre le système laser rotatif (110) et le détecteur (130) sur l'outil de travail sur base d'un temps écoulé entre un signal radioélectrique émis et retourné,

dans lequel l'élévation de l'outil de travail est évaluée sur base du retard détecté et de la distance mesurée.

11. Procédé selon la revendication 10, comprenant par ailleurs le fait de mesurer un laps de temps entre le passage des faisceaux laser en éventail (120) par un repère zéro (910) et la détection par le détecteur (130) des faisceaux laser en éventail (120), pour déterminer une position de l'outil de travail.

12. Procédé selon la revendication 10 ou la revendication 11, comprenant par ailleurs le fait de mesurer un autre laps de temps entre le passage des faisceaux laser en éventail (120) par un autre détecteur (810) et la détection par le détecteur (130) des faisceaux laser en éventail (120), pour évaluer la position de l'outil de travail.

13. Procédé selon la revendication 12, comprenant le fait de mesurer simultanément les distances entre le système laser rotatif (110), le détecteur (130) à l'outil de travail et l'autre détecteur (810), pour déterminer la position de l'outil de travail.

Fig.1

110

122

114

105

120

100

115

112

116

Fig.2

Fig.3

Fig.4

Fig.5a

Fig.5b

Fig.6

Fig.7

Fig.8

Fig.9

Fig.10

**EP 1 912 041 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6947820 B
- US 6630993 B
- US 6535282 B
- WO 9203701 A